# EUROPÄISCHE PATENTSCHRIFT

(11) **EP 4 230 353 B1**
(45) Veröffentlichungstag und Bekanntmachung des Hinweises auf die Patenterteilung: **21.05.2025**
(21) Anmeldenummer: 22157844.6
(22) Anmeldetag: 21.02.2022
(51) Int. Cl.: B25F 5/00, H02K 7/14

(54) **TRAGBARES ARBEITSGERÄT**
PORTABLE WORKING TOOL
APPAREIL DE TRAVAIL PORTATIF

(43) Veröffentlichungstag der Anmeldung: 23.08.2023
(73) Patentinhaber: Andreas Stihl AG & Co. KG, 71336 Waiblingen (DE)
(72) Erfinder: Klett, David, 71642 Ludwigsburg (DE); Diehl, Heiko, 73732 Esslingen (DE); Junker, Sebastian, 71364 Ludwigsburg (DE)
(74) Vertreter: Reinhardt, Annette

(56) Entgegenhaltungen:
- FR-A5- 2 163 286
- JP-A- 2004 209 596
- US-A- 3 973 449

## Beschreibung

Die Erfindung betrifft ein tragbares Arbeitsgerät gemäß dem Oberbegriff des Anspruchs 1. Ein solches Arbeitsgerät ist aus FR 2 163 286 A5 bekannt.

Es sind tragbare Arbeitsgeräte bekannt, die ein Gehäuse, einen in dem Gehäuse angeordneten Antriebsmotor und ein von dem Antriebsmotor angetriebenes Werkzeug aufweisen. Der Antriebsmotor ist als ein Elektromotor, insbesondere als Gleichstrommotor, ausgebildet. Derartige Gleichstrommotoren sind vielseitig einsetzbar und im Handel als Massenartikel erhältlich. Ein solcher Gleichstrommotor besitzt ein Motorgehäuse und eine über eine Lagerung am Motorgehäuse gelagerte Antriebswelle, die sich aus dem Motorgehäuse erstreckt. Die Antriebswelle ist zugleich auch als Rotor des Elektromotors ausgebildet. Derartige Gleichstrommotoren sind üblicherweise als Innenläufer ausgebildet, die Wicklungen des Rotors sind über einen Kommutator angeschlossen. Schleifkontakte, die als Metall- oder Kohlebürsten ausgebildet sein können, liegen am Kommutator an.

Es hat sich bei derartigen Arbeitsgeräten gezeigt, dass bei bereits geringen Betriebslaufzeiten des Arbeitsgerätes Beschädigungen an dem Antriebsmotor auftreten können, wodurch ein Betrieb des Arbeitsgeräts eingeschränkt oder nicht mehr möglich ist.

Die Aufgabe der Erfindung besteht darin, ein tragbares Arbeitsgeräts anzugeben, das eine lange Lebensdauer ermöglicht.

Die Aufgabe wird durch ein tragbares Arbeitsgerät mit den Merkmalen gemäß Anspruch 1 gelöst.

Der Erfindung liegt die Beobachtung zugrunde, dass bei den aus dem Stand der Technik bekannten tragbaren Arbeitsgeräten im Betrieb ein erhöhter Funkenflug zwischen Bürsten und dem Kommutator auftritt. Die Intensität des Funkenflugs ist abhängig vom Lastfall des Arbeitsgerätes. Die Antriebswelle unterliegt im Betrieb des Arbeitsgerätes Biegeschwingungen, wodurch sich die Lage der Schleifkontakte zum Kommutator fortwährend ändert und ein erhöhter Funkenflug entsteht. Der Erfindung liegt nun die Erkenntnis zugrunde, zur Reduzierung des Funkenflugs die Antriebswelle möglichst schwingungsarm zu lagern, um einen gleichmäßigen Kontakt zwischen den Schleifkontakten und dem Kommutator zu ermöglichen.

Das erfindungsgemäße tragbare Arbeitsgerät umfasst ein Gehäuse, wobei sich das Gehäuse von einem ersten Ende bis zu einem zweiten Ende erstreckt, ein Werkzeug, einen im Gehäuse zwischen dem ersten Ende und dem zweiten Ende angeordneten Antriebsmotor mit einer Antriebswelle zum Antrieb des Werkzeuges, wobei der Antriebsmotor ein erstes Lager und ein zweites Lager aufweist, wobei die Antriebswelle mittels des ersten Lagers und des zweiten Lagers gegenüber dem Gehäuse drehbar gelagert ist, eine Antriebsübertragungseinheit, wobei die Antriebsübertragungseinheit funktional zwischen dem Antriebsmotor und dem Werkzeug angeordnet ist, wobei das Arbeitsgerät ein auf der Antriebswelle montiertes zusätzliches Lager zur Abstützung der Antriebswelle gegenüber dem Gehäuse des Arbeitsgerätes umfasst.

Durch den Einsatz des zusätzlichen Lagers wird die Lagerung der Antriebswelle versteift. Lasten werden durch das zusätzliche Lager abgefangen. Die Biegeschwingungen der Antriebswelle werden durch das zusätzliche Lager reduziert oder sogar vollständig vermieden. In anderen Worten werden die Schwingungsamplituden der Biegeschwingungen durch das zusätzliche Lager reduziert. Infolge dreht sich die Antriebswelle mit einer erhöhten Rundlaufgenauigkeit, wodurch sich ein gleichmäßiger Kontakt zwischen den Schleifkontakten und dem Kommutator einstellt. Der Funkenflug ist reduziert, wodurch sich die Lebensdauer des Antriebsmotors verlängert.

Darüber hinaus ist das zusätzliche Lager auch bei anderen Antriebsmotoren, wie bürstenlosen Elektromotoren oder Verbrennungsmotoren von besonderem Vorteil, da durch die Reduzierung der Biegeschwingungen Schäden an Lagern der Antriebswelle, an Motorlagerungen und am Getriebe vermieden werden können.

Das zusätzliche Lager ist vorzugsweise als Loslager ausgebildet. Die motoreigene Lagerung ist bevorzugt als eine Festloslagerung ausgebildet. Durch die Ausbildung des zusätzlichen Lagers als Loslager kann eine Überbestimmung der Lagerung der Antriebswelle und die daraus resultierenden Verspannungen vermieden werden. Das zusätzliche Lager ist insbesondere als Radiallager ausgebildet. Das zusätzliche Lager ist bevorzugt ein Kugellager. Dadurch können neben den Radialkräften auch auf die Antriebswelle wirkende Axialkräfte in Richtung der Drehachse aufgenommen werden.

Es ist vorteilhaft vorgesehen, dass der Antriebsmotor am Gehäuse derart befestigt ist, dass der Antriebsmotor in Richtung seiner Drehachse mit dem Gehäuse fest verbunden ist. Vorzugsweise ist der Antriebsmotor über eine Befestigungseinheit an dem Gehäuse befestigt. Das zusätzliche Lager liegt bevorzugt mit seinem Lageraußenring unmittelbar an der Befestigungseinheit an. Es ist vorteilhaft vorgesehen, dass auf der Antriebswelle des Antriebsmotors ein Ritzel drehfest gehalten ist, wobei das Ritzel Teil der Antriebsübertragungseinheit ist. Das zusätzliche Lager liegt vorzugsweise mit seinem Innenring an einem Aufnahmeabschnitt des Ritzels an. Dadurch werden die auf das Ritzel wirkenden Kräfte, insbesondere Radialkräfte, unmittelbar über das zusätzliche Lager in die Befestigungseinheit geleitet.

Ferner wurde beobachtet, dass an der Antriebswelle im Bereich des zusätzlichen Lagers Resonanzschwingungen auftreten können. Die Ursache der Resonanzschwingungen liegt in einem sogenannten Anklopfen, das heißt, die Kugeln des zusätzlichen Lagers erzeugen beim Durchlaufen des Lastbereiches eine Verformung der Lagerringe, die wiederum zur Resonanzschwingung in der Antriebswelle führt. Um die Verformungen der Lagerringe und die damit verbundenen Resonanzschwingungen zu vermeiden, ist das zusätzliche Lager derart zu dimensionieren, dass sich die Lagerringe nicht mehr verformen. Daher ist ein Außendurchmesser des Außenrings des zusätzlichen Lagers bevorzugt mindestens so groß wie der maximale Außendurchmesser des Ritzels.

Es ist vorteilhaft vorgesehen, dass die Antriebsübertragungseinheit als ein axialkraftfreies Getriebe ausgebildet ist. Demnach ist die Antriebsübertragungseinheit derart ausgebildet, dass auf die Antriebswelle keine Axialkräfte in Richtung der Drehachse des Antriebsmotors wirken. Somit kann auf eine Radiallagerung der Antriebswelle verzichtet werden. Vorteilhaft ist das Ritzel mittels einer Federeinheit in Richtung der Drehachse des Antriebsmotors vorgespannt. Durch den Einsatz der Federeinheit ist die Antriebswelle axial vorgespannt, wodurch fertigungstechnischen Toleranzen entgegengewirkt wird. Dadurch wird ein gezieltes Zahnspiel in der Antriebsübertragungseinheit eingestellt. Ein zu großes oder zu kleines Zahnspiel in der Antriebsübertragungseinheit kann vermieden werden.

Die Antriebsübertragungseinheit weist vorzugsweise ein Übersetzungsverhältnis von 3 auf. Dadurch ein mit hoher Drehzahl drehender Antriebsmotor, insbesondere ein Bürstengleichstrommotor, auch im Arbeitsgerät mit für das Werkzeug angepasster Drehzahl eingesetzt werden.

Es ist vorgesehen, dass der Antriebsmotor ein Motorgehäuse umfasst, wobei die Antriebswelle mittels des ersten Lagers und des zweiten Lagers unmittelbar gegenüber dem Motorgehäuse drehbar gelagert ist.

Weitere Merkmale der Erfindung ergeben sich aus der nachfolgenden Beschreibung sowie den in der Zeichnung dargestellten Ausführungsbeispielen. Es zeigen:
- Fig. 1: in einer perspektivischen Ansicht ein Ausführungsbeispiel eines tragbaren Arbeitsgeräts mit einem Führungsrohr und einem Werkzeug, an dem einen Ende sowie einer Energiequelle an dem anderen Ende des Führungsrohrs,
- Fig. 2: in einer Seitenansicht das erfindungsgemäße tragbare Arbeitsgerät mit einem schematisch angedeuteten Führungsrohr,
- Fig. 3: in einer Draufsicht das tragbare Arbeitsgerät nach Fig. 2,
- Fig. 4: in einer seitlichen Schnittdarstellung das tragbare Arbeitsgerät nach Fig. 2,
- Fig. 5: in einer Schnittdarstellung in einer Ansicht von oben das tragbare Arbeitsgerät nach Fig. 2,
- Fig. 6: in einer ausschnittsweisen Schnittdarstellung in einer Ansicht von oben das tragbare Arbeitsgerät nach Fig. 2 und
- Fig. 7: in einer ausschnittsweisen Schnittdarstellung in einer Ansicht von oben eine alternative, erfindungsgemäße Ausführung des Arbeitsgeräts mit Federeinheit.

In den Figuren sind gleiche Bauteile mit gleichen Bezugszeichen versehen.

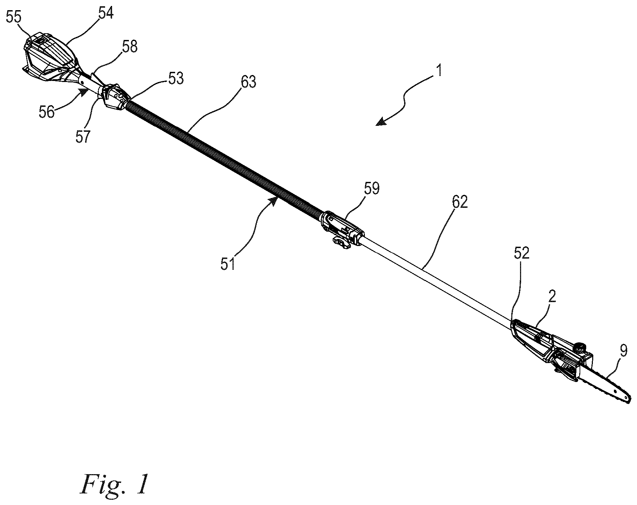

In Fig. 1 ist das tragbare Arbeitsgerät 1 gezeigt, welches als ein Hochentaster ausgebildet ist. Das tragbare Arbeitsgerät 1 kann auch als Motorkettensäge, als Heckenschere, Kreissäge oder dergleichen Arbeitsgerät ausgebildet sein. Das tragbare Arbeitsgerät 1 umfasst ein Gehäuse 2, einen in dem Gehäuse 2 angeordneten Antriebsmotor 5 und ein von dem Antriebsmotor 5 antreibbares Werkzeug 9.

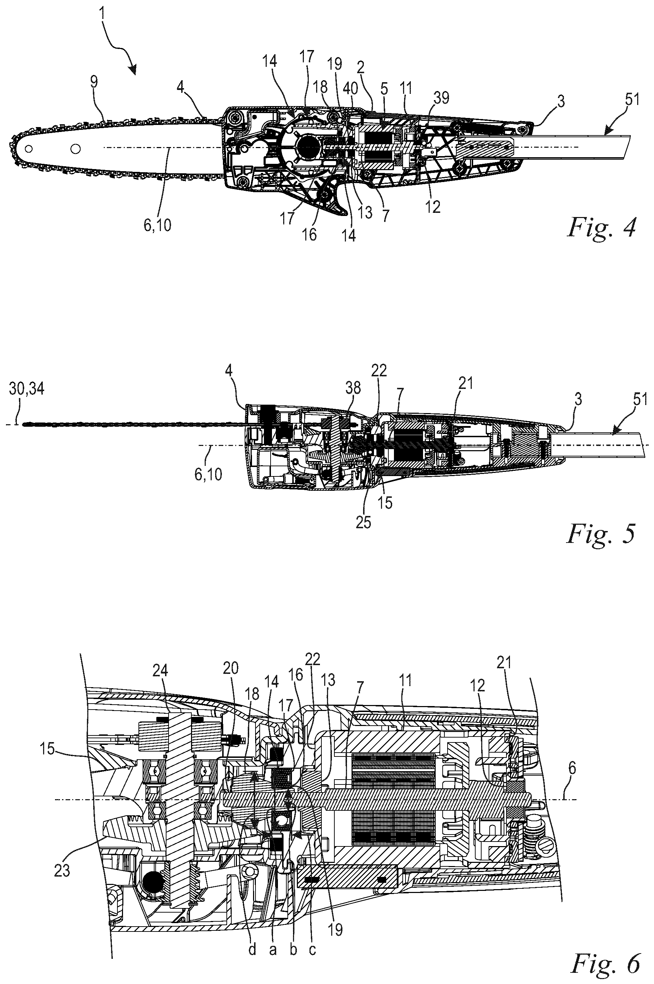

Wie in den Figuren 4 und 5 gezeigt, ist der Antriebsmotor 5 als ein Elektromotor ausgebildet. Der Elektromotor ist im Ausführungsbeispiel als Gleichstrommotor, insbesondere als Bürstenmotor, ausgebildet. Alternativ kann der Elektromotor auch als ein bürstenloser Gleichstrommotor ausgebildet sein. In einer alternativen Ausführung des tragbaren Arbeitsgerätes kann der Antriebsmotor auch als ein Verbrennungsmotor ausgebildet sein.

Wie in Fig. 1 gezeigt, umfasst das tragbare Arbeitsgerät 1 ein Führungsrohr 51 mit einem ersten Ende 52 und einem zweiten Ende 53. An dem ersten Ende 52 des Führungsrohrs ist das Gehäuse 2 des Arbeitsgerätes 1 gehalten. An dem zweiten Ende 53 des Führungsrohrs 51 ist ein zweites Gehäuse 54 gehalten. Das zweite Gehäuse 54 weist einen Aufnahmeschacht 55 zur Aufnahme eines Akkus oder dergleichen Energiequelle auf. Es kann zweckmäßig sein, als Energiequelle ein stationäres Versorgungsnetz zu nutzen, welches über eine elektrische Leitung mit dem zweiten Gehäuse 54 bzw. mit einer im zweiten Gehäuse 54 angeordneten Steuerungselektronik verbunden ist. Im gezeigten Ausführungsbeispiel ist an dem zweiten Ende 53 des Führungsrohrs 51 ein Bediengriff 56 mit Bedienelementen vorgesehen. Im gezeigten Ausführungsbeispiel sind als Bedienelemente ein als Bedienhebel 57 oder Gashebel bezeichnetes Bedienelement und ein Sperrhebel 58 vorgesehen. Der Bedienhebel 57 dient zur Steuerung des Antriebsmotors 5. Der Sperrhebel 58 ist zur Sicherung des Bedienhebels 57 vorgesehen.

Wie in Fig. 1 gezeigt, ist im Ausführungsbeispiel das Führungsrohr 51 vorzugsweise teleskopierbar ausgebildet. Das Führungsrohr 51 umfasst einen ersten Rohrabschnitt 62 mit dem ersten Ende 52 des Führungsrohrs 51 und einen zweiten Rohrabschnitt 63 mit dem zweiten Ende 53 des Führungsrohrs 51. Das Führungsrohr 51 umfasst eine Klemmvorrichtung 59. Die Klemmvorrichtung 59 ist vorzugsweise am zweiten Rohrabschnitt 63 befestigt. Die Klemmvorrichtung 59 dient zur Fixierung des ersten Rohrabschnitts 62 am zweiten Rohrabschnitt 63. In einer alternativen Ausführung ist das Führungsrohr 51 nicht teleskopierbar. In einer solchen Ausführung dient die Klemmvorrichtung 59 zur Verbindung des ersten Rohrabschnittes 62 und des zweiten Rohrabschnittes 63. Es können auch weitere Verlängerungsstücke vorgesehen sein.

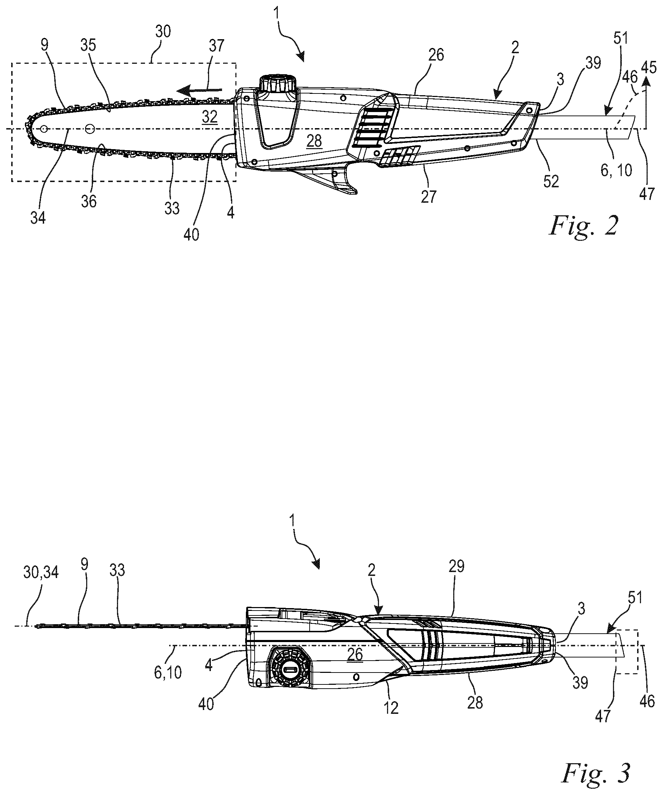

Wie in Fig. 2 gezeigt, erstreckt sich das Gehäuse 2 des tragbaren Arbeitsgerätes 1 in einer Längsrichtung 10 von einem hinteren Ende 3 bis zu einem vorderen Ende 4. Das Werkzeug 9 ist an dem vorderen Ende 4 des Gehäuses angeordnet. Das Werkzeug 9 ist im Ausführungsbeispiel als Sägekette 33 ausgebildet. Die Sägekette 33 ist über ein Kettenantriebsrad 38 (Fig. 5) um eine Führungsschiene 32 in einer Laufrichtung 37 umlaufend angetrieben. Die Laufrichtung 37 der Sägekette 33 ist die für den bestimmungsgemäßen Betrieb des Arbeitsgerätes 1 zum Spanabtrag vorgesehene Bewegungsrichtung der Sägekette 33. Das Kettenantriebsrad 38 ist über den Antriebsmotor 5 drehend angetrieben. Die Führungsschiene 32 ist am vorderen Ende 4 des Gehäuses 2 angeordnet und erstreckt sich in eine Längsrichtung 34, die einer Richtung von dem hinteren Ende 3 zum vorderen Ende 4 des Gehäuses 2 entspricht. Die Sägekette 33 spannt eine Werkzeugebene 30 auf, wobei sowohl die Sägekette 33 als auch die Führungsschiene 32 in der Werkzeugebene 30 liegen.

Wie in Fig. 2 gezeigt, umfasst die Führungsschiene 32 eine Oberseite 35 und eine Unterseite 36. Die Sägekette 33 verläuft im bestimmungsgemäßen Betrieb des tragbaren Arbeitsgerätes 1 an der Oberseite 35 der Führungsschiene 32 in Richtung von dem vorderen Ende 4 des Gehäuses 2 weg. Die Sägekette 33 verläuft im bestimmungsgemäßen Betrieb des tragbaren Arbeitsgerätes 1 an der Unterseite 35 der Führungsschiene 32 in Richtung zu dem vorderen Ende 4 des Gehäuses 2 hin. Sowohl die Oberseite 35 der Führungsschiene 32 als auch die Unterseite 36 der Führungsschiene 32 liegen in der Werkzeugebene 30.

Wie in den Figuren 2 und 3 gezeigt, erstreckt sich das Gehäuse 2 entlang seiner Längsrichtung 10 von seinem hinteren Ende 3 bis zu seinem vorderen Ende 4. Das hintere Ende 3 bildet die erste Stirnseite 39 des Gehäuses 2. Das vordere Ende 4 des Gehäuses 2 bildet die zweite Stirnseite 40 des Gehäuses 2. Das Gehäuse 2 umfasst eine Oberseite 26 und eine Unterseite 27. Zudem umfasst das Gehäuse 2 eine erste Längsseite 28 und eine zweite Längsseite 29. Die erste Stirnseite 39 und die zweite Stirnseite 40 des Gehäuses 2 sind über die Oberseite 26, die Unterseite 27, die erste Längsseite 28 und die zweite Längsseite 29 des Gehäuses 2 miteinander verbunden. Im bestimmungsgemäßen Betrieb des Arbeitsgerätes 1 liegt die Oberseite 26 des Gehäuses 2 oberhalb der Unterseite 27 des Gehäuses 2. Eine von der Unterseite 27 zur Oberseite 26 verlaufende Hochrichtung 45 spannt gemeinsam mit der Längsrichtung 10 bzw. mit der Drehachse 6 des Antriebsmotors 5 eine Längsebene 46 des Gehäuses 2 auf. Das Gehäuse 2 umfasst eine Querebene 47, die zur Längsebene 46 sowie zur Hochrichtung 45 orthogonal ausgerichtet ist. Die Längsseiten 28, 29 sind bezüglich der Längsebene 46 gegenüberliegend zueinander angeordnet. Die Oberseite 26 und die Unterseite 27 sind bezüglich der Querebenen 47 zueinander gegenüberliegend angeordnet. Im Ausführungsbeispiel ist die Längsebene 46 des Gehäuses 2 parallel zur Werkzeugebene 30 ausgerichtet.

Wie in den Figuren 4 bis 6 gezeigt, ist der als Elektromotor ausgebildete Antriebsmotor 5 im Gehäuse 2 zwischen dem hinteren Ende 3 des Gehäuses 2 und dem vorderen Ende 4 des Gehäuses 2 angeordnet. Der Antriebsmotor 5 umfasst eine Drehachse 6, die im Ausführungsbeispiel der Längsrichtung 10 des Gehäuses 2 entspricht. Der Antriebsmotor 5 umfasst ein Motorgehäuse 11, das sich entlang der Drehachse 6 des Antriebsmotors 5 von einem stirnseitigen ersten Ende 21 bis zu einem stirnseitigen zweiten Ende 22 des Motorgehäuses 11 erstreckt. Das erste Ende 21 des Motorgehäuses 11 ist dem hinteren Ende 3 des Gehäuses 2 zugewandt. Das zweite Ende 22 des Antriebsmotors 5 ist dem vorderen Ende 4 des Gehäuses 2 zugewandt.

Wie in den Figuren 4 bis 6 gezeigt, umfasst der Antriebsmotor 5 eine Antriebswelle 7. Die Antriebswelle 7 ragt mit einem Antriebsabschnitt 20 am zweiten Ende 22 des Motorgehäuses 11 aus dem Motorgehäuse 11 in Richtung zum vorderen Ende 4 des Gehäuses 2. Der Antriebsmotor 5 umfasst ein erstes Lager 12 und ein zweites Lager 13. Die Antriebswelle 7 ist über das erste Lager 12 und das zweite Lager 13 am Motorgehäuse 11 drehbar gelagert. Das erste Lager 12 ist am ersten Ende 21 des Motorgehäuses 11 angeordnet. Das zweite Lager 13 ist am zweiten Ende 22 des Motorgehäuses 11 angeordnet. Das erste Lager 12 ist als Loslager ausgebildet. Das zweite Lager 13 ist als Festlager ausgebildet. Das erste Lager 12 und das zweite Lager 13 bilden somit eine Fest-Los-Lagerung zwischen der Antriebswelle 7 und dem Motorgehäuse 11. Das erste Lager 12 und das zweite Lager 13 sind in den Figuren 4 bis 6 lediglich schematisch angedeutet.

Wie insbesondere in Fig. 6 gezeigt, weist das tragbare Arbeitsgerät 1 eine Antriebsübertragungseinheit 8 auf. Die Antriebsübertragungseinheit 8 ist dazu ausgebildet, die Energie des Antriebsmotors 5 auf das anzutreibende Werkzeug 9 zu übertragen. Im vorliegenden Ausführungsbeispiel ist die Antriebsübertragungseinheit 8 als Getriebe ausgebildet, da sowohl die Drehzahl als auch das Drehmoment vom Antriebsmotor 5 bis hin zum Werkzeug 9 gewandelt werden. Im vorliegenden Ausführungsbeispiel umfasst die Antriebsübertragungseinheit 8 ein Ritzel 18, ein Kegelrad 23 und das Kettenantriebsrad 38. Es kann in einer alternativen Ausgestaltung des Arbeitsgerätes 1 auch zweckmäßig sein, die Antriebsübertragungseinheit 8 anders auszubilden.

Wie insbesondere in Fig. 6 gezeigt, ist auf dem Antriebsabschnitt 20 der Antriebswelle 7 das Ritzel 18 drehfest angeordnet. Das Ritzel 18 ist über eine Presspassung auf der Antriebswelle 7 gehalten. Alternativ kann das Ritzel 18 auch formschlüssig, insbesondere über eine Nut-Feder Verbindung auf der Antriebswelle 7 drehfest gehalten sein. Das Ritzel 18 ist mit dem Kegelrad 23 wirkverbunden. Das Arbeitsgerät 1 weist eine Abtriebswelle 24 auf, wobei das Kegelrad 23 auf der Abtriebswelle 24 drehfest gehalten ist. Die Abtriebswelle 24 ist im Gehäuse 2 drehbar gelagert. Auf der Abtriebswelle 24 ist das Kettenantriebsrad 38 drehfest gehalten. Das auf der Antriebswelle 7 des Antriebsmotors 5 angeordnete Ritzel 18 treibt das Kegelrad 23 an. Die Abtriebswelle 24 und damit auch das Kettenantriebsrad 38 werden wiederum über das Kegelrad 23 angetrieben.

Aus der Wirkverbindung zwischen dem Kegelrad 23 und dem Ritzel 18 werden in Betrieb des Arbeitsgerätes 1 Kräfte über das Ritzel 18 auf die Antriebwelle 7 übertragen, die zu Biegeschwingungen der Antriebswelle 7 führen können. Um diesen Biegeschwingungen entgegenzuwirken, umfasst das Arbeitsgerät 1 ein zusätzliches Lager 14, wie in den Figuren 4 bis 6 gezeigt. Das zusätzliche Lager 14 lagert die Antriebswelle 7 zumindest mittelbar gegen das Gehäuse 2. Das zusätzliche Lager 14 ist ein Radiallager. Somit ist die Antriebswelle 7 dreifach gelagert, wodurch die Amplituden der Biegeschwingungen der Antriebswelle 7 erheblich reduziert sind, oder sogar gänzlich vermieden werden können. Dieser Umstand wirkt sich vorteilhaft auf die Lebensdauer des Antriebsmotors 5 aus. Das zusätzliche Lager 14 ist als Kugellager ausgebildet, wodurch das zusätzliche Lager 14 neben Radialkräften auch Axialkräfte, also Kräfte die in Richtung der Drehachse 6 wirken gegen das Gehäuse 2 abstützen kann. Das Ritzel 18 weist einen Aufnahmeabschnitt 19 auf. Das zusätzliche Lager 14 ist im Ausführungsbeispiel unmittelbar auf dem Aufnahmeabschnitt 19 des Ritzels 18 angeordnet. Demnach liegt das zusätzliche Lager 14 mit seinem Lagerinnenring 17 unmittelbar auf dem Aufnahmeabschnitt 19 des Ritzels 18 an. Somit werden die auf das Ritzel 18 wirkenden Kräfte unmittelbar auf das zusätzliche Lager 14 in das Gehäuse 2 übertragen. Der Kraftfluss verläuft nicht über die Antriebswelle 7. Es kann in einer alternativen Ausgestaltung des Arbeitsgerätes 1 zweckmäßig sein, das zusätzliche Lager 14 unmittelbar auf der Antriebswelle 7 anzuordnen. Dabei ist zu beachten, dass die Anordnung des zusätzlichen Lagers 14 möglichst nahe an der Krafteinleitung in die Antriebswelle 7 erfolgt, um die Kräfte unter geringer Biegebelastung der Antriebswelle 7 auf das Gehäuse 2 übertragen zu können. Demnach ist in einer solchen alternativen Ausführung das zusätzliche Lager 14 benachbart zum Ritzel 18 unmittelbar auf dem Antriebsabschnitt 20 der Antriebswelle 7 befestigt.

Wie in Fig. 6 gezeigt, weist das zusätzliche Lager 14 einen radial zur Drehachse 6 gemessenen Außendurchmesser a, einen radial zur Drehachse 6 gemessenen Innendurchmesser b und eine in Richtung der Drehachse 6 gemessene Lagerbreite c auf. Der Außendurchmesser a des zusätzlichen Lagers 14 ist mindestens so groß wie ein maximaler Außendurchmesser d des Ritzels 18. Bevorzugt ist der Außendurchmesser a des zusätzlichen Lagers 14 größer als der Außendurchmesser des ersten Lagers 12 und des zweiten Lagers 13. Bevorzugt beträgt der Außendurchmesser a des zusätzlichen Lagers 14 mindestens 15 mm, vorzugsweise mindestens 20 mm, insbesondere in etwa 22 mm. Bevorzugt beträgt der Innendurchmesser b des zusätzlichen Lagers 14 mindestens 5 mm, insbesondere mindestens 7, vorzugsweise in etwa 8 mm. Bevorzugt beträgt die Breite c des zusätzlichen Lagers 14 mindestens 5 mm, insbesondere mindestens 6 mm, bevorzugt in etwa 7 mm.

Die vom Ritzel 18 auf das Kegelrad 23 zu übertragende Kraft ist über das zusätzliche Lager 14 an dem Gehäuse 2 abzustützen. Ist das Arbeitsgerät 1 in Betrieb, dreht sich die Antriebswelle 7, wobei die Kugeln des zusätzlichen Lagers 14 im zusätzlichen Lager 14 einen Bereich der maximalen Kraftübertragung wiederkehrend, also in einer Kugelpassierfrequenz, durchlaufen. In dem Bereich der maximalen Kraftübertragung können sogar Verformungen des Lagerinnenrings 17 und / oder des Lageraußenrings 16 auftreten und somit auch eine Verformung der Antriebswelle 7 bewirken. Entspricht die Kugelpassierfrequenz einer Erregerfrequenz der Antriebswelle 7 oder des gesamten Antriebsmotors 5, kann der Antriebsmotor 5 beschädigt werden. Die oben beschriebene Überdimensionierung des zusätzlichen Lagers 14 führt dazu, dass sich der Lageraußenring 16 und der Lagerinnenring 17 des zusätzlichen Lagers 14 nicht mehr verformen und infolge auch nicht mehr merklich auf die Antriebswelle 7 mit der Kugelpassierfrequenz wirken.

Wie in den Figuren 4 bis 6 gezeigt, umfasst das Arbeitsgerät 1 eine Befestigungseinheit 15. Die Befestigungseinheit 15 ist zur Befestigung des Antriebsmotors 5 am Gehäuse 2 ausgebildet. Der Antriebsmotor 5, insbesondere das Motorgehäuse 11 des Antriebsmotors 5, ist vorzugsweise unmittelbar an der Befestigungseinheit 15 befestigt. Im Ausführungsbeispiel ist der Antriebsmotor 5 über mehrere Schrauben 25, insbesondere über vier Schrauben 25 an der Befestigungseinheit 15 festgeschraubt. In einer alternativen Ausführung des tragbaren Arbeitsgerätes 1 kann es zweckmäßig sein, auch eine andere Anzahl an Schrauben 25 vorzusehen, um den Antriebsmotor 5 an der Befestigungseinheit 15 zu befestigen. Die Befestigungseinheit 15 ist im bevorzugten Ausführungsbeispiel über nicht näher dargestellte Antivibrationselemente mit dem Gehäuse 2 des Arbeitsgerätes 1 verbunden. Es kann in einer alternativen Ausführung des Arbeitsgerätes 1 auch vorgesehen sein, die Befestigungseinheit 15 unmittelbar an dem Gehäuse 2 des Arbeitsgerätes 1 zu befestigen. Die Befestigungseinheit 15 ist vorzugsweise aus einer Metallplatte gebildet. Die Metallplatte ist vorzugsweise aus einer Magnesiumlegierung, insbesondere aus einer Aluminiumlegierung gebildet. Das zusätzliche Lager 14 kontaktiert mit seinem Außenring 16 die Befestigungseinheit 15. Das zusätzliche Lager 14 ist im Ausführungsbeispiel als Loslager ausgebildet, um Verspannungen zwischen dem Antriebsmotor 5 und der Befestigungseinheit 15 zu vermeiden. Da das Motorgehäuse 11 mit der Befestigungseinheit 15 fest verschraubt ist, würde eine Ausbildung des zusätzlichen Lagers 14 als Festlager zur Überbestimmung des Systems führen und bei Ausdehnung der Antriebswelle 7 in Betrieb des Arbeitsgerätes 1 zur Verspannung des Systems, gegebenenfalls sogar zur Beschädigung des Antriebsmotors 5 führen.

Wie in den Figuren 4 bis 6 gezeigt, sind das Kegelrad 23 und das Ritzel 18 im Eingriff. Bei derartigen Kegelradgetrieben entstehen üblicherweise hohe Axialkräfte, die auf das Antriebsritzel in Richtung der Antriebswelle wirken. Derartige Axialkräfte sind durch entsprechende Radiallager oder angestellte Lagerungen abzustützen. Der im vorliegenden Ausführungsbeispiel verwendete Antriebsmotor 5 ist ein einfacher handelsüblicher Bürstengleichstrommotor. Derartige Antriebsmotoren 5 sind mit einer Fest-Los-Lagerung ihrer Antriebswelle 7 versehen, wobei die einzelnen Lager 12, 13 als Kugellager ausgebildet sind. Diese sind zur Abstützung hoher Axialkräfte nicht geeignet. Auch das zusätzliche Lager 14 ist zur Abstützung hoher Axialkräfte nicht geeignet.

Daher ist die Antriebsübertragungseinheit 8 im bevorzugten Ausführungsbeispiel als ein axialkraftfreies Getriebe ausgebildet. Der Begriff "axialkraftfrei" ist derart zu verstehen, dass über die Antriebsübertragungseinheit 8 lediglich Kräfte in Richtung der Drehachse 6 auf die Antriebswelle 7 wirken, die kleiner als 10 N, vorzugsweise kleiner als 5 N, insbesondere kleiner als 2 N sind. Die Antriebsübertragungseinheit 8 ist sowohl im bestimmungsgemäßen Betrieb des Arbeitsgerätes 1 als auch im Fehlbetrieb des Arbeitsgerätes 1 ein axialkraftfreies Getriebe. Ein Fehlbetrieb ist ein Betrieb des Arbeitsgerätes 1, bei dem beispielsweise die Kette durch einen besonders harten Gegenstand blockiert. Die Antriebsübertragungseinheit 8 weist im Ausführungsbeispiel ein Übersetzungsverhältnis von 3 auf. Der im Ausführungsbeispiel vorgesehene Gleichstrommotor weist eine Drehzahl von in etwa 20000 1/min auf. Durch das Übersetzungsverhältnis von 3 kann die Drehzahl für den Betrieb des Arbeitsgerätes 1 reduziert werden.

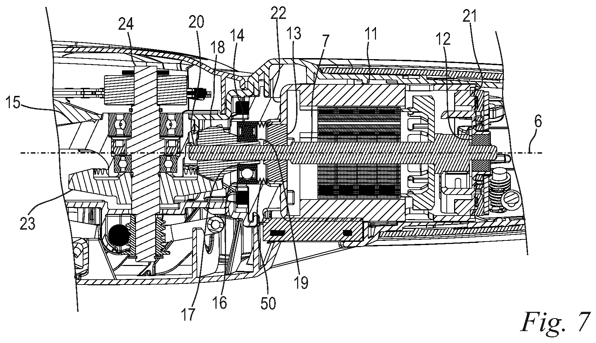

In einer alternativen Ausführung des Arbeitsgerätes 1 gemäß Figur 7 umfasst das Arbeitsgerät 1 eine Federeinheit 50. Die Federeinheit 50 ist derart ausgebildet, dass diese das Ritzel 18 in Richtung der Drehachse 6 zum Kegelrad 23 hin vorspannt. Dadurch, dass das Ritzel 18 und das Kegelrad 23 derart ausgebildet sind, dass keine Axialkräfte vom Kegelrad 23 auf das Ritzel 18 übertragen werden, liegt ein Axialspiel der Antriebswelle 7 vor. Das veränderliche Axialspiel wird durch den Einsatz der Federeinheit 50 überwunden. Die Federeinheit 50 ist vorzugsweise als Druckfeder ausgebildet. Die Federeinheit 50 stützt sich am Motorgehäuse 11 und / oder am zweiten Lager 13 des Antriebsmotors 5 ab und wirkt auf das zusätzliche Lager 14. Dabei drückt die Federeinheit 50 die Antriebswelle 7 mit dem Ritzel 18 gegen das Kegelrad 23, wodurch das Axialspiel der Antriebswelle 7 überwunden ist. Die Toleranz des Zahnspiels zwischen dem Kegelrad 23 und dem Ritzel 18 ist reduziert, wodurch sich eine höher Lebensdauer sowie eine Reduzierung der Geräuschemissionen der Antriebsübertragungseinheit 8 einstellt.

## Patentansprüche

1. Tragbares Arbeitsgerät,
umfassend
- ein Gehäuse (2), wobei sich das Gehäuse (2) von einem ersten Ende (3) bis zu einem zweiten Ende (4) erstreckt,
- ein Werkzeug (9),
- einen im Gehäuse (2) zwischen dem ersten Ende (3) und dem zweiten Ende (4) angeordneten Antriebsmotor (5) mit einer Antriebswelle (7) zum Antrieb des Werkzeuges (9), wobei der Antriebsmotor (5) ein Elektromotor ist, wobei der Antriebsmotor (5) ein erstes Lager (12) und ein zweites Lager (13) aufweist, wobei die Antriebswelle (7) mittels des ersten Lagers (12) und des zweiten Lagers (13) gegenüber dem Gehäuse (2) drehbar gelagert ist,
- eine Antriebsübertragungseinheit (8), wobei die Antriebsübertragungseinheit (8) funktional zwischen dem Antriebsmotor (5) und dem Werkzeug (9) angeordnet ist,
**dadurch gekennzeichnet, dass** das Arbeitsgerät (1) ein auf der Antriebswelle (7) angeordnetes zusätzliches Lager (14) zur Abstützung der Antriebswelle (7) gegenüber dem Gehäuse (2) des Arbeitsgerätes (1) umfasst, und dass der Antriebsmotor (5) ein Motorgehäuse (11) umfasst, wobei die Antriebswelle (7) mittels des ersten Lagers (12) und des zweiten Lagers (13) unmittelbar gegenüber dem Motorgehäuse (11) drehbar gelagert ist.

2. Arbeitsgerät nach Anspruch 1,
**dadurch gekennzeichnet, dass** das zusätzliche Lager (14) als Loslager ausgebildet ist.

3. Arbeitsgerät nach Anspruch 1 oder 2,
**dadurch gekennzeichnet, dass** das zusätzliche Lager (14) ein Kugellager ist.

4. Arbeitsgerät nach einem der Ansprüche 1 bis 3,
**dadurch gekennzeichnet, dass** der Antriebsmotor (5) am Gehäuse (2) derart befestigt ist, dass der Antriebsmotor (5) in Richtung seiner Drehachse (6) mit dem Gehäuse (2) fest verbunden ist.

5. Arbeitsgerät nach einem der Ansprüche 1 bis 4,
**dadurch gekennzeichnet, dass** der Antriebsmotor (5) über eine Befestigungseinheit (15) an dem Gehäuse (2) befestigt ist.

6. Arbeitsgerät nach Anspruch 5,
**dadurch gekennzeichnet, dass** das zusätzliche Lager (14) mit seinem Lageraußenring (16) unmittelbar an der Befestigungseinheit (15) anliegt.

7. Arbeitsgerät nach einem der Ansprüche 1 bis 6,
**dadurch gekennzeichnet, dass** auf der Antriebswelle (7) des Antriebsmotors (5) ein Ritzel (18) drehfest gehalten ist, wobei das Ritzel (18) Teil der Antriebsübertragungseinheit (8) ist.

8. Arbeitsgerät nach Anspruch 7,
**dadurch gekennzeichnet, dass** das zusätzliche Lager (14) mit seinem Lagerinnenring (17) auf einem Aufnahmeabschnitt (19) des Ritzels (18) anliegt.

9. Arbeitsgerät nach Anspruch 7 oder 8,
**dadurch gekennzeichnet, dass** ein Außendurchmesser (a) des Lageraußenrings (16) des zusätzlichen Lagers (14) mindestens so groß wie der maximale Außendurchmesser (d) des Ritzels (18) ist.

10. Arbeitsgerät nach einem der Ansprüche 7 bis 9,
**dadurch gekennzeichnet, dass** das Ritzel (18) mittels einer Federeinheit (50) in Richtung der Drehachse (6) des Antriebsmotors (5) vorgespannt ist.

11. Arbeitsgerät nach einem der Ansprüche 1 bis 10,
**dadurch gekennzeichnet, dass** die Antriebsübertragungseinheit (8) als ein axialkraftfreies Getriebe ausgebildet ist.

12. Arbeitsgerät nach einem der Ansprüche 1 bis 11,
**dadurch gekennzeichnet, dass** die Antriebsübertragungseinheit (8) ein Übersetzungsverhältnis von drei aufweist.

## Claims

1. Portable implement,
comprising
- a housing (2), wherein the housing (2) extends from a first end (3) to a second end (4),
- a tool (9),
- a drive motor (5), which is arranged in the housing (2) between the first end (3) and the second end (4) and has a drive shaft (7) for driving the tool (9), wherein the drive motor (5) is an electric motor, wherein the drive motor (5) has a first bearing (12) and a second bearing (13), wherein, by means of the first bearing (12) and the second bearing (13), the drive shaft (7) is mounted rotatably in relation to the housing (2),
- a drive-transmission unit (8), wherein the drive-transmission unit (8) is functionally arranged between the drive motor (5) and the tool (9),
**characterized in that** the implement (1) comprises an additional bearing (14), which is arranged on the drive shaft (7) and serves for supporting the drive shaft (7) in relation to the housing (2) of the implement (1), and **in that** the drive motor (5) comprises a motor housing (11), wherein, by means of the first bearing (12) and the second bearing (13), the drive shaft (7) is directly mounted rotatably in relation to the motor housing (11).

2. Implement according to Claim 1,
**characterized in that** the additional bearing (14) is designed as a floating bearing.

3. Implement according to Claim 1 or 2,
**characterized in that** the additional bearing (14) is a ball bearing.

4. Implement according to one of Claims 1 to 3,
**characterized in that** the drive motor (5) is fastened to the housing (2) in such a way that the drive motor (5) is connected fixedly to the housing (2) in the direction of its axis of rotation (6).

5. Implement according to one of Claims 1 to 4,
**characterized in that** the drive motor (5) is fastened to the housing (2) via a fastening unit (15).

6. Implement according to Claim 5,
**characterized in that** the additional bearing (14) directly bears against the fastening unit (15) by way of its bearing outer ring (16).

7. Implement according to one of Claims 1 to 6,
**characterized in that** a pinion (18) is held rotationally conjointly on the drive shaft (7) of the drive motor (5), wherein the pinion (18) is part of the drive-transmission unit (8).

8. Implement according to Claim 7,
**characterized in that** the additional bearing (14) bears on a receiving portion (19) of the pinion (18) by way of its bearing inner ring (17).

9. Implement according to Claim 7 or 8,
**characterized in that** an outer diameter (a) of the bearing outer ring (16) of the additional bearing (14) is at least as large as the maximum outer diameter (d) of the pinion (18).

10. Implement according to one of Claims 7 to 9,
**characterized in that** the pinion (18) is preloaded in the direction of the axis of rotation (6) of the drive motor (5) by means of a spring unit (50).

11. Implement according to one of Claims 1 to 10,
**characterized in that** the drive-transmission unit (8) is designed as an axial-force-free gear mechanism.

12. Implement according to one of Claims 1 to 11,
**characterized in that** the drive-transmission unit (8) has a transmission ratio of three.

## Revendications

1. Appareil portatif de travail,
comprenant
- un boîtier (2), le boîtier (2) s'étendant d'une première extrémité (3) à une deuxième extrémité (4),
- un outil (9),
- un moteur d'entraînement (5) agencé dans le boîtier (2) entre la première extrémité (3) et la deuxième extrémité (4) et comportant un arbre d'entraînement (7) pour entraîner l'outil (9), le moteur d'entraînement (5) étant un moteur électrique, le moteur d'entraînement (5) comportant un premier roulement (12) et un deuxième roulement (13), l'arbre d'entraînement (7) étant monté à rotation par rapport au boîtier (2) au moyen du premier roulement (12) et du deuxième roulement (13),
- une unité (8) de transmission d'entraînement, l'unité (8) de transmission d'entraînement étant agencée de manière fonctionnelle entre le moteur d'entraînement (5) et l'outil (9),
**caractérisé en ce que** l'appareil de travail (1) comprend un roulement supplémentaire (14) agencé sur l'arbre d'entraînement (7) pour soutenir l'arbre d'entraînement (7) par rapport au boîtier (2) de l'appareil de travail (1), et **en ce que** le moteur d'entraînement (5) comprend un boîtier de moteur (11), l'arbre d'entraînement (7) étant monté de manière rotative directement par rapport au boîtier de moteur (11) au moyen du premier roulement (12) et du deuxième roulement (13).

2. Appareil de travail selon la revendication 1,
**caractérisé en ce que** le roulement supplémentaire (14) est conçu sous forme d'un roulement flottant.

3. Appareil de travail selon la revendication 1 ou la revendication 2,
**caractérisé en ce que** le roulement supplémentaire (14) est un roulement à billes.

4. Appareil de travail selon l'une des revendications 1 à 3,
**caractérisé en ce que** le moteur d'entraînement (5) est fixé au boîtier (2) de manière que le moteur d'entraînement (5) soit solidaire du boîtier (2) dans la direction de son axe de rotation (6).

5. Appareil de travail selon l'une des revendications 1 à 4,
**caractérisé en ce que** le moteur d'entraînement (5) est fixé au boîtier (2) par l'intermédiaire d'une unité de fixation (15).

6. Appareil de travail selon la revendication 5,
**caractérisé en ce que** le roulement supplémentaire (14) s'appuie directement sur l'unité de fixation (15) par son anneau extérieur de roulement (16).

7. Appareil de travail selon l'une des revendications 1 à 6,
**caractérisé en ce qu'**un pignon (18) est maintenu fixe en rotation sur l'arbre d'entraînement (7) du moteur d'entraînement (5), le pignon (18) faisant partie de l'unité (8) de transmission d'entraînement.

8. Appareil de travail selon la revendication 7,
**caractérisé en ce que** le roulement supplémentaire (14) s'appuie par son anneau intérieur de roulement (17) sur une portion de réception (19) du pignon (18).

9. Appareil de travail selon la revendication 7 ou la revendication 8,
**caractérisé en ce qu'**un diamètre extérieur (a) de l'anneau extérieur (16) du roulement supplémentaire (14) est au moins aussi grand que le diamètre extérieur maximal (d) du pignon (18).

10. Appareil de travail selon l'une des revendications 7 à 9,
**caractérisé en ce que** le pignon (18) est précontraint dans la direction de l'axe de rotation (6) du moteur d'entraînement (5) au moyen d'une unité à ressort (50).

11. Appareil de travail selon l'une des revendications 1 à 10,
**caractérisé en ce que** l'unité (8) de transmission d'entraînement est conçue sous la forme d'un engrenage sans force axiale.

12. Appareil de travail selon l'une des revendications 1 à 11,
**caractérisé en ce que** l'unité (8) de transmission d'entraînement présente un rapport de transmission de trois.
